# EUROPÄISCHE PATENTSCHRIFT

(11) **EP 1 005 512 B1**
(45) Veröffentlichungstag und Bekanntmachung des Hinweises auf die Patenterteilung: **25.09.2002**
(21) Anmeldenummer: 98939649.4
(22) Anmeldetag: 31.07.1998
(51) Int. Cl.: C09D 151/08, B05D 1/36

(54) **VERFAHREN ZUR HERSTELLUNG VON MEHRSCHICHTIGEN ÜBERZÜGEN**
METHOD FOR PRODUCING MULTILAYER COATINGS
MODE DE FABRICATION DE REVETEMENTS A COUCHES MULTIPLES

(30) Priorität: 22.08.1997 DE 19736535
(43) Veröffentlichungstag der Anmeldung: 07.06.2000
(73) Patentinhaber: BASF Coatings AG, 48165 Münster (DE)
(72) Erfinder: WEGNER, Egon, D-48143 Münster (DE); WIEMANN, Gudrun, D-48291 Telgte (DE); SAPPER, Ekkehard, D-97222 Rimpar (DE); ANGERMÜLLER, Harald, D-97078 Würzburg (DE)
(74) Vertreter: Fitzner, Uwe, Dr.
(86) Internationale Anmeldenummer: EP9804802
(87) Internationale Veröffentlichungsnummer: WO99010439

(56) Entgegenhaltungen:
- EP-A2- 0 522 420
- WO-A1-91/15528

## Beschreibung

### Gebiet der Erfindung

Die vorliegende Erfindung betrifft wäßrige Basislackzusammensetzungen, die als Bindemittelbestandteile eine wäßrige Acrylatdispersion (i), eine wäßrige Polyurethanharzdispersion (ii) und ein Rheologiehilfsmittel (iii) enthalten.

### Stand der Technik

Aus dem Stand der Technik sind Verfahren zur Lackierung von Fahrzeuginsbesondere von Automobilkarosserien bekannt, bei denen das Substrat in der Regel zuerst mit einem Elektrotauchlack und/oder Steinschlagzwischengrund bzw. einer Füllerschicht beschichtet wird und anschließend unter Verwendung eines mindestens ein Pigment enthaltenen Lackes eine Basislackschicht aufgebracht und diese Basislackschicht gegebenenfalls mit einem transparenten Lack überlackiert wird. Die so erhaltene ein- bzw. mehrschichtige Lackierung wird anschließend eingebrannt.
Die zur Herstellung der Basislackschicht verwendeten Basislacke sind üblicherweise Systeme auf Wasser- bzw. Lösungsmittelbasis. Sie enthalten als Hauptbindemittel in der Regel Polyurethan-Dispersionen oder Acrylatdispersionen, kombiniert mit wassermischbaren vernetzbaren Polyestern sowie mit wassermischbaren Melaminharzen.
In DE-A 43 39 870 werden Basislacke beschrieben, die als Bindemittel ein Polymer enthalten, das erhältlich ist, indem in einer wäßrigen Dispersion eines Polyurethanharzes, das ein zahlenmittleres Molekulargewicht Mn von 1000 bis 30.000 Dalton aufweist und im statistischen Mittel pro Molekül 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder eines Gemisches aus wasserunlöslichen Initiatioren radikalisch polymerisiert wird, wobei das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt.

Basislacke nach DE-A 43 39 870 weisen eine verbesserte Lagerstabilität, eine sehr gute Haftung zwischen Basislackschicht und Subtrat und eine sehr gute Beständigkeit gegenüber Luftfeuchtigkeit auf.
In der noch nicht veröffentlichten deutschen Patentanmeldung P 195 47 944.0 werden Basislacke beschrieben, die darüber hinaus mit üblichen Klarlacken, wie z.B. wäßrigen oder Lösemittel-haltigen Klarlacken oder Pulverklarlacken, verträglich sind, womit solche Klarlacke auf den Basislack appliziert werden können, ohne daß es zu einer Verschlechterung des Aussehens des Lacksystems kommt.
Gegenstand der deutschen Patentanmeldung P 195 47 944.0 ist ein Verfahren zur Herstellung eines mehrschichtigen Überzugs auf einer Substratoberfläche, bei dem
(A) auf eine mit einem üblichen Füller beschichtete Substratoberfläche als Basislack eine wäßrige Beschichtungszusammensetzung, die als filmbildendes Mittel eine wäßrige Polymerdispersion enthält, aufgebracht wird,
(B) auf die so erhaltene Basisschicht eine geeignete transparente Deckbeschichtungszusammensetzung aufgebracht wird und
(C) die Basisschicht zusammen mit der Deckschicht eingebrannt wird, wobei der Basislack eine wäßrige Polymerdispersion enthält, die
   (i) eine Acrylatdispersion mit einem Gehalt von 30 bis 60 Gew.-% C₁-C₈-Alkyl(meth)acrylat-haltigen Monomeren, 30 bis 60 Gew.-% vinylaromatischen Monomeren und 0,5 bis 10 Gew.-% (Meth)acrylsäure und
   (ii) ein Rheologiehilfsmittel, das ein synthetisches Polymer mit ionischen und/oder assoziativ wirkenden Gruppen ist,
   enthält.
   Ein weiterer Gegenstand der P 195 47 944.0 ist ein Verfahren zur Ausbesserung von mehrschichtigen Lackierungen, worin
(D) eine auf einen üblichen Füller aufgebrachte Basislackschicht mit einer wäßrige Polymerdispersion als filmbildendes Mittel enthaltenden wäßrigen Beschichtungszusammensetzung ausgebessert wird,
(E) die in Stufe (D) erhaltene Beschichtung mit einer geeigneten transparenten Deckbeschichtungszusammensetzung beschichtet wird und
(F) die Basisschicht zusammen mit der Deckschicht eingebrannt wird, wobei die Basisbeschichtungszusammensetzung eine wäßrige Polymerdispersion enthält, die
   (i) eine Acrylatdispersion mit einem Gehalt von 30 bis 60 Gew.-% C₁-C₈-Alkyl(meth)acrylat-haltigen Monomeren, 30 bis 60 Gew.-% vinylaromatischen Monomeren und 0,5 bis 10 Gew.-% (Meth)acrylsäure und
   (ii) ein Rheologiehilfsmittel, das ein synthetisches Polymer mit ionischen und/oder assoziativ wirkenden Gruppen ist, enthält.
Auf Basisbeschichtungen gemäß P 195 47 944.0 können beliebige transparente Lacke aufgebracht werden, wie beispielsweise wäßrige oder lösemittelhaltige Lacke oder auch Pulverlacke sowie Pulverslurry-Lacke, was in den aus dem Stand der Technik bekannten Verfahren nicht möglich ist. Überzüge, die die erfindungsgemäß verwendete Basisschicht enthalten, lassen sich bei Beschädigungen problemlos ausbessern.

### Aufgabe und Lösung

Es wurde festgestellt, daß die Basislacke gemäß der deutschen Patentanmeldung P 195 47 944.0 trotz ihres ausgezeichneten Eigenschaftsspektrums noch eine verhältnismäßig schlechte Haftung zu den transparenten Decklackbeschichtungen, insbesondere zu 2-Komponenten-Klarlacken und zu Pulverslurry-Klarlacken als Decklack aufweisen.
Dieser Effekt kann zwar durch einen vollständigen Austausch des im Basislack gemäß P 195 47 944.0 eingesetzten Bindemittels gegen das aus DE-A 43 39 870 bekannte Bindemittel geringfügig verbessert werden, die Haftung von solchermaßen modifizierten Basislacken nach Belastung im Schwitzwasser-Test ist jedoch noch unbefriedigend.

Überraschenderweise wurde gefunden, daß Basislackzusammensetzungen enthaltend als Bindemittelbestandteile
(i) eine an sich bekannte Acrylatdispersion mit einem Gehalt von 30 bis 60 Gew.-% C₁-C₈-Alkyl(meth)acrylat-haltigen Monomeren, 30 bis 60 Gew.-% vinylaromatischen Monomeren und 0,5 bis 10 Gew.-% (Meth)acrylsäure, jeweils bezogen auf das Acrylatcopolymerisat, sowie
(ii) eine Dispersion eines Polymeren, das in an sich bekannterweise erhältlich ist, indem in einer wäßrigen Dispersion eines Polyurethanharzes, das ein zahlenmittleres Molekulargewicht Mn von 1000 bis 30.000 Dalton aufweist und im statistischen Mittel pro Molekül 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder eines Gemischs aus wasserunlöslichen Initiatioren radikalisch polymerisiert wird, wobei das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt, und
(iii) ein Rheologiehilfsmittel, das vorzugsweise ein synthetisches Polymer mit ionischen und/oder assoziativ wirkenden Gruppen enthält, und gegebenenfalls zusätzlich ein anorganisches Rheologiehilfsmittel,
diese Aufgabe hervorragend lösen, wobei der Anteil der Komponente (i) zwischen 10 und 80 Gew.-%, besonders bevorzugt zwischen 20 und 60 Gew.-%, der Anteil der Komponente (ii) zwischen 20 und 90 Gew.-%, besonders bevorzugt zwischen 40 und 80 Gew.-%, jeweils bezogen auf die Summe der Gewichtanteile der Komponenten (i) und (ii).

Die Erfindung umfaßt weiterhin Verfahren zur Herstellung eines mehrschichtigen Überzugs auf einer Substratoberfläche, bei denen
(A) auf eine mit einem üblichen Füller oder gegebenfalls mit einem bekannten wäßrigen Wasserbasislack, beispielsweise einem Dünnschichtfüller gemäß DE-A 44 38 504, vorbeschichtete Substratoberfläche die erfindungsgemäße wäßrige Basislackzusammensetzung aufgebracht wird,
(B) auf die so erhaltene Basisschicht eine geeignete transparente Deckbeschichtungszusammensetzung aufgebracht wird und
(C) die Basisschicht sowie gegebenenfalls die Füllerschicht bzw. die erste Basislackschicht zusammen mit der Deckschicht eingebrannt wird.

### Durchführung der Erfindung

Die Komponente (i) besteht aus einer wäßrigen Dispersion eines Copolymerisats aus 30 bis 60 Gew.-%, bezogen auf das Acrylatcopolymerisat, C₁-C₈-Alkyl(meth)acrylaten, wobei die linearen und verzweigtkettigen Derivate eingesetzt werden können. Als Beispiele seien insbesondere Methyl(meth)acrylat, Ethyl(meth)acrylat, n-Propyl- und iso-Propyl(meth)acrylat, n-Butyl- und iso-Butyl(meth)acrylat und 2-Ethylhexyl(meth)acrylat oder Gemische aus diesen Monomeren genannt. Als weitere Monomere können auch (Meth)acrylamid-Monomere und deren Derivate sowie (Meth)acrylnitril eingesetzt werden.
Als vinylaromatische Monomere können als Bestandteile der Komponente (i)in Anteilen von 30 bis 60 Gew.-%, bezogen auf das Acrylatcopolymerisat, beispielsweise Styrol, alpha-Alkylstyrol und Vinyltoluol eingesetzt werden.
Die Acrylatdispersion (i) kann nach aus dem Stand der Technik bekannten Verfahren hergestellt werden. Das Mengenverhältnis zwischen den Monomeren und dem Wasser kann so ausgewählt werden, daß die resultierende Dispersion einen Feststoffgehalt von bevorzugt 30 bis 60 Gew.-% aufweist.
Als Emulgator wird vorzugsweise ein anionischer Emulgator allein oder im Gemisch mit anderen eingesetzt.
Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4 bis 5 Mol Ethylenoxid pro Mol umgesetzten Nonylphenols, Alkyl - oder Arylsulfonats, Natriumlaurylsulfat, Natriumlaurylethoxylatsulfat und sekundäre Natriumalkansulfonate, deren Kohlenstoffkette 8 bis 20 Kohlenstoffatome enthält. Die Menge des anionischen Emulgators beträgt 0,1 bis 5,0 Gew.-%, bezogen auf die Monomeren, vorzugsweise 0,5 bis 3,0 Gew.-%. Ferner kann zur Erhöhung der Stabilität der wäßrigen Dispersionen (i) zusätzlich ein nichtionischer Emulgator vom Typ eines ethoxylierten Alkylphenols oder Fettalkohols, z.B. ein Additionsprodukt von 1 Mol Nonylphenol und 4 bis 30 Mol Ethylenoxid in Mischung mit dem anionischen Emulgator eingesetzt werden.

Die Mindestfilmbildungstemperatur (MFT) des Acrylat(co)polymerisats liegt vorzugsweise zwischen -30°C und 60°C, besonders bevorzugt zwischen 0°C und 30°C
Das erfindungsgemäß eingesetzte Acrylatpolymer weist bevorzugt ein zahlenmittleres Molekulargewicht Mn von 200.000 bis 2.000.000 Dalton, vorzugsweise von 300.000 bis 1.500.000 Dalton, auf (Bestimmung:
Gelpermeationschromatographisch mit Polystyrol als Standard).

Die Komponente (ii) des erfindungsgemäßen Basislacks besteht aus einer wäßrigen Dispersion ein Polymeren, das, wie in DE-A-43 39 870 beschrieben, erhältlich ist, indem in einer wäßrigen Dispersion eines Polyurethanharzes, das ein zahlenmittleres Molekulargewicht Mn von 1.000 bis 30.000 Dalton aufweist und im statistischen Mittel pro Molekül 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei das Gewichtsverhältnis zwischen dem Polyurethanharz und dem ethylenisch ungesättigten Monomeren bzw. dem Gemisch aus ethylenisch ungesättigten Monomeren zwischen 1:10 und 10:1 liegt. Es ist bevorzugt anionisch und weist eine Säurezahl zwischen 20 und 60 mg KOH/g auf.
Die wäßrige Dispersion des Polyurethanharzes, in der das ethylenisch ungesättigte Monomer bzw. das Gemisch aus ethylenisch ungesättigten Monomeren in Gegenwart eines wasserunlöslichen Initiators oder einer Mischung aus wasserunlöslichen Initiatoren radikalisch polymerisiert wird, ist gemäß DE-A 43 39 870 herstellbar, indem aus
(a) einem Polyester- und/oder Polyetherpolyol mit einem zahlenmittleren Molekulargewicht von 400 bis 5000 Dalton oder einem Gemisch aus solchen Polyester- und/oder Polyetherpolyolen und
(b) einem Polyisocyanat oder einem Gemisch aus Polyisocyanaten, gegebenenfalls zusammen mit einem Monoisocyanat oder einem Gemisch aus Monoisocyanaten und
(c) einer Verbindung, die mindestens eine gegenüber Isocyanatgruppen reaktive und mindestens eine zur Anionenbildung befähigte Gruppe im Molekül aufweist oder einem Gemisch aus solchen Verbindungen oder
(d) einer Verbindung, die mindestens eine gegenüber NCO-Gruppen reaktive Gruppe und mindestens eine Poly(oxyalkylen)gruppe im Molekül aufweist, oder einem Gemisch aus solchen Verbindungen oder
(e) einer Mischung aus den Komponenten (c) und (d) und
(f) gegebenenfalls einer Verbindung, die neben einer polymerisierbaren Doppelbindung mindestens noch eine gegenüber NCO-Gruppen reaktive Gruppe enthält oder einem Gemisch aus solchen Verbindungen und
(g) gegebenenfalls einer Hydroxyl- und/oder Aminogruppen enthaltenden organischen Verbindung mit einem Molekulargewicht von 60 bis 399 Dalton oder einem Gemisch aus solchen Verbindungen,
ein Polyurethanharz, das ein zahlenmittleres Molekulargewicht Mn von 1.000 bis 30.000 Dalton, vorzugsweise 1500 bis 20.000 Dalton aufweist und im statistischen Mittel 0,05 bis 1,1, vorzugsweise 0,2 bis 0,9 polymerisierbare Doppelbindungen enthält, hergestellt und in Wasser dispergiert wird.
Das Polyurethanharz kann sowohl in Substanz als auch in organischen Lösemitteln hergestellt werden.
Das Polyurethanharz kann durch gleichzeitige Umsetzung aller Ausgangsverbindungen hergestellt werden. In vielen Fällen ist es jedoch zweckmäßig, das Polyurethanharz stufenweise herzustellen. So ist es zum Beispiel möglich, aus den Komponenten (a) und (b) ein isocyanatgruppenhaltiges Präpolymer herzustellen, das dann mit der Komponente (c) oder (d) oder (e) weiter umgesetzt wird. Weiter ist es möglich, aus den Komponenten (a) und (b) und (c) oder (d) oder (e) und gegebenenfalls (f) ein isocyanatgruppenhaltiges Präpolymer herzustellen, das dann mit der Komponente (g) zu einem höhermolekularen Polyurethanharz umgesetzt werden kann. Die Umsetzung mit der Komponente (g) kann in Substanz oder - wie beispielsweise in der EP-A 0 297 576 beschrieben - in Wasser durchgeführt werden. In den Fällen, in denen als Komponente (f) eine Verbindung eingesetzt wird, die nur eine gegenüber Isocyanatgruppen reaktive Gruppe enthält, kann in einer ersten Stufe aus (b) und (f) ein isocyanatgruppenhaltiges Vorprodukt hergestellt werden, das anschließend mit den weiteren Komponenten weiter umgesetzt werden kann.
Die Umsetzung der Komponenten (a) bis (g) kann auch in Gegenwart von Katalysatoren, wie z.B. Dibutylzinndilaurat, Dibutylzinnmaleat und tertiären Aminen durchgeführt werden.
Die einzusetzenden Mengen an Komponente (a), (b), (c), (d), (e), (f) und (g) ergeben sich aus dem anzustrebenden zahlenmittleren Molekulargewicht Mn und der anzustrebenden Säurezahl. Die polymerisierbaren Doppelbindungen können durch Einsatz von polymerisierbare Doppelbindungen aufweisende (a) Komponenten und/oder polymerisierbare Doppelbindungen aufweisende (b) Komponenten und/oder die Komponente (f) in die Polyurethanmoleküle eingeführt werden. Es ist bevorzugt, die polymerisierbaren Doppelbindungen über die Komponente (f) einzuführen. Außerdem ist es bevorzugt, Acrylat-, Methacrylat oder Allylethergruppen als polymerisierbare Doppelbindungen enthaltende Gruppen in die Polyurethanharzmoleküle einzuführen.
Als Komponente (a) können gesättigte und ungesättigte Polyester- und/oder Polyetherpolyole, insbesondere Polyester- und/oder Polyetherdiole mit einem zahlenmittleren Molekulargewicht von 400 bis 5000 Dalton eingesetzt werden. Zu den Komponenten (a) im einzelnen sei auf DE-A 43 39 870 verwiesen.
Als Komponente (b) können aliphatische und/oder cycloaliphatische und/oder aromatische Polyisocyanate eingesetzt werden. Als Beispiele für aromatische Polyisocyanate werden Phenylendiisocyanat, Toluylendiisocyanat, Xylylendiisocyanat, Biphenylendiisocyanat, Naphtylendiisocyanat und Diphenylmethandiisocyanat genannt. Aufgrund ihrer guten Beständigkeit gegenüber ultraviolettem Licht ergeben (cyclo)aliphatische Polyisocyanate Produkte mit geringer Vergilbungsneigung. Zu den Komponenten (b) im einzelnen sei auf DE-A 43 39 870 verwiesen.
Um das in Rede stehende Polyurethanharz in Wasser stabil dispergieren zu können, muß es hydrophile Gruppen enthalten. Diese hydrophilen Gruppen werden durch die Komponente (c) oder die Komponente (d) oder die Komponente (e) in das Polyurethanharz eingeführt. Die zur Anionenbildung befähigten Gruppen der Komponente (c) werden vor oder während der Dispergierung des Polyurethanharzes in Wasser mit einer Base, vorzugsweise Ammoniak oder einem tertiären Amin, wie z.B. Dimethylethanolamin, Triethylamin, Tripropylamin und Tributylamin neutralisiert, so daß das Polyurethanharz nach der Neutralisation anionische Gruppen enthält. In dem Falle, in dem ausschließlich die Komponente (c) als hydrophile Gruppen liefernde Komponente eingesetzt wird, wird die Komponente (c) in einer solchen Menge eingesetzt, daß das Polyurethanharz eine Säurezahl von 15 bis 80 mg KOH/g, vorzugsweise 20 bis 60 mg KOH/g, aufweist. In dem Fall, in dem ausschließlich die Komponente (d) als hydrophile Gruppen liefernde Komponente eingesetzt wird, wird die Komponente (d) in einer solchen Menge eingesetzt, daß das Polyurethanharz 5 bis 40 Gew.-%, vorzugsweise 10 bis 30 Gew.% Oxyalkylengruppen enthält, wobei evtl. durch die Komponente (a) eingeführte Oxyalkylengruppen mit einzurechnen sind. In dem Fall, in dem die Komponente (e) als hydrophile Gruppe liefernde Komponente eingesetzt wird, liegen die einzusetzenden Mengen an Komponente (c) und (d) entsprechend dem Mischungsverhältnis zwischen den oben angegebenen Werten für die Fälle, in denen die Komponente (c) bzw. (d) als alleiniger Lieferant für hydrophile Gruppen eingesetzt werden. Im übrigen kann der Fachmann die Mengen an einzusetzender Komponente (c), (d) oder (e) problemlos durch einfache Routineversuche ermitteln. Er muß lediglich mittels einfacher Reihenversuche prüfen, wie hoch der Anteil an hydrophilen Gruppen mindestens sein muß, um eine stabile wäßrige Polyurethanharzdispersion zu erhalten. Er kann selbstverständlich auch noch allgemein übliche Dispergierhilfsmittel, wie z.B. Emulgatoren mitverwenden, um die Polyurethanharzdispersionen zu stabilisieren. Die Mitverwendung von Dispergierhilfsmitteln ist jedoch nicht bevorzugt, weil dadurch im allgemeinen die Feuchtigkeitsempfindlichkeit der erhaltenen Basislacke erhöht wird.
Als Komponente (c) werden vorzugsweise Verbindungen eingesetzt, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Geeignete zur Anionenbildung befähigte Gruppen sind Carboxyl-, Sulfonsäureund/oder Phosphonsäuregruppen, wobei Carboxylgruppen bevorzugt sind. Zu den Komponenten (c) im einzelnen sei auf DE-A 43 39 870 verwiesen.
Mit Hilfe der Komponente (d) können Poly(oxyalkylen)gruppen als nichtionische stabilisierende Gruppen in die Polyurethanmoleküle eingeführt werden. Als Komponente (d) können beispielsweise eingesetzt werden: Alkoxypoly(oxyalkylen)alkohole mit der allgemeinen Formel R'O-(-CH₂-CHR"-O-)ₙ-H in der R' für einen Alkylrest mit 1 bis 6 Kohlenstoffatomen, R" für ein Wasserstoffatom oder einen Alkylrest mit 1 bis 6 Kohlenstoffatomen und n für eine Zahl zwischen 20 und 75 steht.
Die Komponente (f) dient zur Einführung von polymerisierbaren Doppelbindungen in die Polyurethanharzmoleküle. Es ist bevorzugt, als Komponente (f) eine Verbindung einzusetzen, die mindestens eine gegenüber NCO-Gruppen reakive Gruppe und eine polymerisierbare Doppelbindung enthält. Besonders bevorzugt werden als Komponente (f) Verbindungen eingesetzt, die neben einer polymerisierbaren Doppelbindung noch zwei gegenüber NCO-Gruppen reaktive Gruppen enthalten. Als Beispiele für gegenüber NCO-Gruppen reaktive Gruppen werden -OH, -SH, > NH und -NH₂-Gruppen genannt, wobei -OH, > NH und NH₂-Gruppen bevorzugt sind. Als Beispiele für Verbindungen, die als Komponente (f) eingesetzt werden können, werden genannt: Hydroxy(meth)acrylate, insbesondere Hydroxyalkyl(meth)acrylate wie Hydroxyethyl-, Hydroxypropyl-, Hydroxybutyl- oder Hydroxyhexyl(meth)acrylat und 2,3-Dihydroxypropyl(meth)acrylat, 2,3-Dihydroxypropylmonoallylether, Glycerinmono(meth)acrylat, Glycerinmonoallylether, Pentaerythritmono(meth)acrylat, Pentaerythritdi(meth)acrylat, Pentaerythritmonoallylether, Pentaeythritdiallylether, Trimethylolpropanmonoallylether, Trimethylpropanmono(meth)acrylat und Trimethylolpropandiallylether. Als Komponente (f) wird vorzugsweise Glycerinmono(meth)acrylat, Pentaerythritdi(meth)acrylat, Pentaerythritdiallyether und Trimethylolpropanmono(meth)acrylat eingesetzt. Als Komponente (f) werden besonders bevorzugt Trimethylolpropanmonoallylether, Glycerinmonoallylether und 2,3-Dihydroxypropansäureallylester eingesetzt. Es ist bevorzugt, die (f) Komponenten, die mindestens zwei gegenüber NCO-Gruppen reaktive Gruppen enthalten, kettenständig (nicht endständig) in die Polyurethanmoleküle einzubauen.

Als Komponente (g) können beispielsweise Polyole mit Molgewichten zwischen 60 und 399 Dalton wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von bis zu 30 Gew.-%, vorzugsweise 2 bis 20 Gew.-%, bezogen auf die eingesetzte Menge an Komponente (a) und (g) eingesetzt.
Als Komponente (g) können auch Di- und/oder Polyamine mit primären und/oder sekundären Aminogruppen eingesetzt werden. Polyamine sind im wesentlichen Alkylen-Polyamine mit Molgewichten zwischen 60 und 399 Dalton. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Menthandiamin, Isophorondiamin, 4,4'-Diaminodicyclohexylmethan und
Aminoethylethanolamin. Bevorzugte Diamine sind Hydrazin, Alkyl- oder Cycloalkyldiamine wie Propylendiamine und 1-Amino-3-aminomethyl-3,5,5-trimethylcyclohexan. Es können auch Polyamine als Komponente (g) eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylentriamin und Dibutylentriamin. Als Beispiel für ein Monoamin wird Ethylhexylamin genannt.
Das in der erfindungsgemäßen Komponente (ii) enthaltene Bindemittel ist erhältlich, indem in der oben beschrieben wäßrigen Polyurethanharzdispersion ein ethylenisch ungesättigtes Monomer oder ein Gemisch aus ethylenisch ungesättigten Monomeren in Gegenwart eines wasserunlöslichen Initiators oder einer Mischung aus wasserunlöslichen Initiatoren radikalisch polymerisiert wird, wobei das Gewichtsverhältnis zwischen dem Polyurethanharz und dem ethylenisch ungesättigten Monomer bzw. dem Gemisch aus ethylenisch ungesättigten Monomeren zwischen 1:10 und 10:1, vorzugsweise zwischen 1:2 und 2:1 liegt.
Als ethylenisch ungesättigte Monomeren können eingesetzt werden:
(α) aliphatische oder cycloaliphatische Ester der Acrylsäure oder Methacrylsäure, die weder Hydroxyl- noch Carboxylgruppen enthalten oder ein Gemisch aus solchen Estern und
(β) mindestens eine Hydroxylgruppe im Molekül tragende ethylenisch ungesättigte Monomere oder ein Gemisch aus solchen Monomeren und
(γ) mindestens eine Carboxylgruppe im Molekül tragende ethylenisch ungesättigte Monomere oder ein Gemisch aus solchen Monomeren und
(δ) weitere von (α), (β) und (γ) verschiedene ethylenisch ungesättigte Monomere oder ein Gemisch aus solchen Monomeren und
(ε) polyungesättigte Monomere, insbesondere ethylenisch polyungesättigte Monomere
sowie Mischungen aus den Komponenten (α), (β), (γ), (δ) und (ε).
Als ethylenisch ungesättigte Monomere werden vorzugsweise Mischungen eingesetzt, die aus 40 bis 100 Gew.-%, vorzugsweise 60 bis 90 Gew.-% der Komponente (α), 0 bis 30 Gew.-%, vorzugsweise 0 bis 25 Gew.-% der Komponente (β), 0 bis 10 Gew.-%, vorzugsweise 0 bis 5 Gew.-%, ganz besonders bevorzugt 0 Gew.-% der Komponente (γ) und 0 bis 50 Gew.-%, vorzugsweise 0 bis 30 Gew.- der Komponente (δ) sowie 0 bis 5 Gew.-%, vorzugsweise 0 Gew.-% der Komponente (ε), wobei die Summe der Gewichtsanteile von (α), (β), (γ), (δ) und (ε) stets 100 Gew.-% ergibt.
Als Komponente (α) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-,Ethyl-,Propyl-,Butyl-, Hexyl-, Ethylhexyl-, Stearyl- und Laurylacrylat und -methacrylat oder Gemische aus diesen Monomeren.

Als Komponente (β) können z.B. eingesetzt werden: Hydroxyalkylester der Acrylsäure, Methacrylsäure oder einer anderen alpha,beta-ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (β) werden vorzugsweise Hydroxyalkylester der Acrylsäure und Methacrylsäure, in denen die Hydroxyalkylgruppe bis zu 6 Kohlenstoffatome enthält, oder Mischungen aus diesen Hydroxy-alkylestern eingesetzt. Beispiele hierzu können der DE-A 43 39 870 entnommen werden.
Als Komponente (γ) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.
Als Komponente (δ) können z.B. eingesetzt werden: vinylaromatische Kohlenwasserstoffe, wie Styrol, alpha-Alkylstyrol und Vinyltoiuol, Acryl- und
Methacrylamid und Acryl- und Methacrylnitril oder Gemische aus diesen Monomeren.
Als Komponenten (ε) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6-Hexandioldi(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester usw.
Als wasserunlösliche Initiatoren können beispielsweise wasserunlösliche Azoverbindungen und wasserunlösliche Peroxyverbindungen eingesetzt werden. Als Beispiele für wasserunlösliche Azoverbindungen werden 2,2-Azobis-(isobutyronitril), 2,2'-Azo-bis-(isovaleronitril), 1,1'-Azo-bis-(cyclohexancarbonitril) und 2,2'-Azo-bis-(2,4-dimethylvaleronitril) genannt. Als Beispiele für wasserunlösliche Peroxyverbindungen werden t-Amylperoxyethylhexanoat, t-Butylperoxyethylhexanoat, Dilaurylperoxid, Dibenzoylperoxid und 1,1-Dimethyl-3-hydroxybutyl-(1)-peroxyethylhexanoat genannt.
Es können selbstverständlich auch Polymerisationsregler zugesetzt werden.
Die Polymerisation des ethylenisch ungesättigten Monomers bzw. der Mischung aus ethylenisch ungesättigten Monomeren kann durchgeführt werden, indem das ethylenisch ungesättigte Monomer bzw. die Mischung aus ethylenisch ungesättigten Monomeren der wäßrigen Polyurethanharzdispersion langsam zugesetzt werden. Dabei ist es möglich, sowohl die gesamte Menge der Monomeren auf einmal zuzugeben als auch nur einen Teil vorzulegen und den Rest im Verlauf der Reaktion nachzudosieren. Die zu polymerisierenden Monomere können jedoch auch mit Hilfe eines Teils der Polyurethanharzdispersion und Wasser in eine Präemulsion gebracht werden, die dann langsam der Vorlage zugesetzt wird. Die Zulaufzeit der zu polymerisierenden Monomere beträgt im allgemeinen 2 bis 8, vorzugsweise etwa 3 bis 4 Stunden.
Die wasserunlöslichen Initiatoren können der Vorlage zugesetzt werden oder zusammen mit den Monomeren zugetropft werden. Sie können auch anteilsweise der Vorlage zugegeben werden, die einen Teil der Monomeren enthält. Der Rest an Initiator wird dann mit den restlichen Monomeren zudosiert. Die Reaktionstemperatur ergibt sich aus der Zerfallsgeschwindigkeit des Initiators bzw. Initiatorgemisches und kann gegebenenfalls durch geeignete organische Redoxsysteme herabgesetzt werden. Die Polymerisation des ethylenisch ungesättigten Monomers bzw. der Mischung aus ethylenisch ungesättigten Monomeren erfolgt im allgemeinen bei einer Temperatur von 30 bis 100°C, insbesondere bei einer Temperatur von 60 bis 95°C. Wenn bei Überdruck gearbeitet wird, können die Reaktionstemperaturen über 100°C ansteigen.
Das ethylenisch ungesättigte Monomer bzw. das Gemisch aus ethylenisch ungesättigten Monomeren ist so auszuwählen, daß die auf die oben beschriebene Art und Weise erhaltenen Bindemittelpolymeren eine Hydroxylzahl von 0 bis 100 mg KOH/g, vorzugsweise 0 bis 80 mg KOH/g, und eine Säurezahl von 10 bis 40 mg KOH/g, vorzugsweise 15 bis 30 mg KOH/g aufweisen.
Als Rheologiehilfsmittel der Komponente (iii) der Basislackzusammensetzung kommen insbesondere synthetische Polymere mit ionisch und/oder assoziativ wirkenden Gruppen in Betracht. Beispiele hierfür sind Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophobmodifizierte ethoxylierte Urethane oder Polyacrylate. Besonders bevorzugt werden Carboxylgruppen-haltige Polyacrylat-Copolymere mit einer Säurezahl von 60 bis 780 mg KOH/g, insbesondere von 200 bis 500 mg KOH/g, eingesetzt. Das Rheologiehilfsmittel sollte der Basislackzusammensetzung insbesondere bei dem eingesetzten pH-Wert die gewünschte Viskosität verleihen. So eignen sich insbesondere ionische Acrylat-Dispersionen, die bei den im Lacksystem vor der Härtung vorliegenden pH-Werten faserartige Gele bilden und sich so über die anderen Bestandteile legen bzw. diese locker verbinden, wodurch bereits vor dem Einbrennen bzw. Trocknen des Lackes eine filmartige Struktur erhalten wird. Besonders bevorzugt werden Polyacrylsäure-Dispersionen eingesetzt, die gegebenenfalls mit weiteren Comonomeren polymerisiert sein können. Das Rheologiehilfsmittel ist in der erfindungsgemäß verwendeten Basislackzusammensetzung vorzugsweise in einer Menge von 0,01 bis 5,0 Gew.-%, insbesondere etwa 0,1 bis 1 Gew.-%, bezogen auf den Festkörpergehalt, enthalten. Als weitere Rheologiehilfsmittel sind beispielsweise Xanthan Gum, Diharnstoffverbindungen, Polyurethanverdicker, Bentonit, Wachse sowie Wachscopolymere und bevorzugt. ionische Schichtsilikate und deren Gemische geeignet.
Besonders bevorzugt als Rheologiehilfsmittel (iii) sind Gemische aus den oben genannten synthetischen Polymeren mit ionischen oder assoziativ wirkenden Gruppen und den ionischen Schichtsilikaten.

Als Vernetzer sind insbesondere die auf dem Lackgebiet bekannten Vernetzer wie Melaminharze oder blockierte Polyisocyanate einsetzbar, die mit freien OH-Gruppen reagieren können.
Als vernetzende Hilfsbindemittel kann das erfindungsgemäße Überzugsmittel weiterhin epoxyfunktionelle und/oder carboxylfunktionelle Bestandteile enthalten, wie übliche Glycidylverbindungen, wie z.B. Glycidylacrylat oder Glycidylmethacrylat. Als carboxylfunktionelle Vernetzer eignen sich beispielsweise Carbonsäuren, insbesondere gesättigte, geradkettige, aliphatische Dicarbonsäuren mit 3 bis 20 C-Atomen im Molekül, wobei Dodecan-1,12-disäure bevorzugt eingesetzt wird.

Als weiteres Hilfsbindemittel kann gegebenenfalls auch Polyvinylalkohol eingesetzt werden. Es wurde festgestellt, daß durch den Zusatz von Polyvinylalkohol in einer Menge bis zu 10 Gew.-%, vorzugsweise von 1 bis 5 Gew.-%, die Verträglichkeit mit den auf der Basislackzusammensetzung aufgebrachten transparenten Decklackzusammensetzungen verbessert werden kann. Polyvinylalkohol wirkt Lösemittel-abstoßend, so daß in der Decklackzusammensetzung möglicherweise enthaltenes Lösemittel oder andere Komponenten aufgrund der abstoßenden Wirkung des Polyvinylalkhols nicht in die Basislackzusammensetzung eindringen und die Farbe verändern können.

Die Basislackzusammensetzungen können neben den voranstehend beschriebenen Polymeren noch weitere verträgliche wasserverdünnbare Harze enthalten, wie z.B. Aminoplastharze, Polyester, blockierte Polyurethane, wie beispielsweise in DE-A 41 07 136 beschrieben und Polyurethane, die im allgemeinen als Anreibeharze für die Pigmente oder als Zusatzbindemittel dienen.

Die erfindungsgemäß eingesetzten Basislackzusammensetzungen weisen im allgemeinen einen Festkörpergehalt von etwa 15 bis 60 Gew.-% auf. Der Festkörpergehalt variiert mit dem Verwendungszweck der Beschichtungszusammensetzungen. Für Metalliclacke liegt er beispielsweise bevorzugt bei 12 bis 25 Gew.-%. Für unifarbige Lacke liegt er höher, beispielsweise bevorzugt bei 25 bis 60 Gew.-%.

Zur Neutralisierung der Komponenten (i) und (ii) können Amine (insbesondere Alkylamine), Aminoalkohole und cyclische Amine, wie Di- und Triethylamin, Aminomethylpropanol, N,N-Dimethylethanolamin, Diisopropanolamin, Morpholin, N-Alkylmorpholin, eingesetzt werden. Für die Neutralisation werden leicht flüchtige Amine bevorzugt, besonders bevorzugt Ammoniak. Das wäßrige Überzugsmittel wird üblicherweise auf einen pH-Wert zwischen 6 und 9, vorzugsweise zwischen 6,5 und 8,5, besonders bevorzugt zwischen 7,0 und 8,2, eingestellt.

Die Basislackzusammensetzung kann organische Lösemittel in einer Menge bis zu 15 Gew.-% enthalten. Als organische Lösemittel sind beispielsweise Naphthaline, Benzine und Alkohole geeignet. Als weitere organische Lösemittel können die erfindungsgemäßen Basislacke Alkylenglykole, wie Ethylenglykol, Propylenglykol, Butylenglykol, Butandiol-1,4, Hexandiol-1,6, Neopentylglykol und andere Diole, wie Dimethylolcyclohexan, sowie bevorzugt Butylglykol oder Ethylhexanol enthalten.

Als Pigmente kann die Basislackzusammensetzung übliche, zur Lackierung von Automobilkarosserien eingesetzte Pigmente enthalten, wie z.B. Effektpigmente sowie organische und anorganische farbgebende Pigmente.
Beispiele für geeignete Effektpigmente sind handelsübliche Aluminiumbronzen, die gemäß DE-A 36 36 183 chromatierten Aluminiumbronzen, handelsübliche Edelstahlbronzen sowie andere übliche Metallplättchen und Metallflockenpigmente sowie nichtmetallische Effektpigmente, wie z.B. Perlglanz- bzw. Interferenzpigmente.
Beispiele für geeignete farbgebende Pigmente auf anorganischer Basis sind Titandioxid, Eisenoxide, Ruß und ähnliche. Beispiele für farbgebende Pigmente auf organischer Basis sind Indanthrenblau, Cromophthalrot, Irgazinorange, Sicotransgelb, Heliogengrün und ähnliche.
Ferner können Korrosionsschutzpigmente, wie z.B. Zinkphosphat, enthalten sein.
Zusätzlich kann die Basislackzusammensetzung auch auf dem Gebiet der Lackchemie übliche Füllstoffe enthalten. Hierzu zählen Kieselsäure, Magnesiumsilikat, Titandioxid und Bariumsulfat.
Der Anteil der Pigmente und Füllstoffe im erfindungsgemäßen Überzugsmittel kann insgesamt 3 bis 65 Gew.-%, bezogen auf den Festkörpergehalt, betragen. Das Pigment kann in beliebiger Weise zugesetzt werden, z.B. als wäßrige Slurry oder als Paste. Solche Pasten enthalten bevorzugt ein Anreibebindemittel, vorzugsweise auf Polyurethanbasis, wie beispielsweise die in DE-A 40 10 176 oder DE-A 41 07 136 beschriebenen Polyurethanharze, eines der obengenannten Rheologiehilfsmittel. deionisiertes Wasser, organisches Lösemittel sowie das Pigment oder eine Mischung aus Pigmenten. Werden Aluminium bzw. Flakes eingesetzt, so werden diese gegebenenfalls in Lösemittel sowie eventuell einem Gemisch aus Wasser und Netzmittel aufgeschlämmt oder im Hauptbindemittel oder in einem anderen Hilfsbindemittel angerieben.

Die Menge der Komponenten (i) und (ii) kann in Abhängigkeit vom eingesetzten Pigment variieren. Sind die Pigmente organische und/oder anorganische farbgebende Pigmente, so sind die Komponenten (i) und (ii) vorzugsweise in einer Menge von 10 bis 60 Gew.-%, bezogen auf den Festkörpergehalt der Basislackzusammensetzung, in der Basislackzusammensetzung enthalten. Sind die Pigmente Effektpigmente, sind die Komponenten (i) und (ii) vorzugsweise in einer Menge von 30 bis 80 Gew.-%, bezogen auf den Festkörpergehalt der Basislackzusammensetzung, in der Basislackzusammensetzung enthalten.

Als weitere Komponente kann die Basislackzusammensetzung Filmbildehilfsmittel enthalten. Als Filmbildehilfsmittel kommen beispielsweise Dicarbonsäuredialkylester, hochsiedende Benzine und Naphthaline in Betracht, die einen Siedepunkt über 100°C, vorzugsweise über 140°C aufweisen.

Die Basislackzusammensetzung kann gegebenenfalls noch weitere Hilfsmittel und Additive enthalten. Beispiele hierfür sind Katalysatoren, Hilfsstoffe, Entschäumungsmittel, Dispersionshilfsmittel, Netzmittel, vorzugsweise carboxy-funktionelle Dispergiermittel, Antioxidantien, UV-Absorber, Radikalfänger, Verlaufsmittel, Biozide und/oder Wasserrückhaltemittel.

Die Basisbeschichtungszusammensetzung wird auf eine mit einem üblichen Füller beschichtete Substratoberfläche oder gegebenenfalls auf eine schon mit einem ersten bevorzugt wäßrigen Basislack, beispielsweise einem Dünnschichtfüller, beschichtete Substratoberfläche, aufgebracht. Als Füller kann jeder physikalisch gut trocknende aus dem Stand der Technik bekannte Füller eingesetzt werden. Als wäßrige Dünnschichtfüller werden bevorzugt die in DE-A 44 38 504 beschriebenen Lacke eingesetzt. Im allgemeinen läßt man die Füllerschicht oder die anstelle der Füllerschicht eingesetzte erste Basislackschicht vor den Auftrag der erfindungsgemäßen Basislackschicht kurz abdunsten.

Nach der Applikation des Füllers bzw. des ersten Basislacks wird die erfindungsgemäße Basislackzusammensetzung in an sich bekannter Weise, beispielsweise durch Spritzen, Streichen, Tauchen, Fluten, Rakeln oder Walzen auf das Substrat, wie beispielsweise Metall, Kunststoff, Holz oder Glas aufgebracht.

Die Basislackzusammensetzung kann gegebenenfalls vor Aufbringen auf die Füllerschicht oder die anstelle der Füllerschicht eingesetzten ersten Basislackschicht noch mit Wasser zur Einstellung des Festkörpergehaltes, Lösungsmittel oder Rheologiehilfsmittel zur Einstellung der anwendungstechnischen Eigenschaften sowie gegebenenfalls eine Base zur pH-Regulierung zugesetzt werden. Sollte die Viskosität noch nicht in dem gewünschten Bereich liegen, so kann erneut Rheologiehilfsmittel (iii) oder weiterer Verdicker, gegebenenfalls in einer Menge von 0,001 bis 0,2 Gew.-%, bezogen auf den Festkörpergehalt, zugesetzt werden.

Die auf das Substrat aufgebrachte erfindungsgemäße Basislackschicht wird im allgemeinen mit einer geeigneten transparenten Decklackbeschichtung überlackiert. Vor dem Auftragen der transparenten Decklackbeschichtung läßt man das Überzugsmittel vorteilhafterweise kurz abdunsten, vorzugsweise 1 bis 15 Minuten, insbesondere 4 bis 8 Minuten, bei einer Temperatur von 60 bis 100°C. Der Zeitraum des Abdunstens hängt von der Temperatur ab und ist über weite Bereiche einstellbar.

Als transparente Decklackbeschichtung können alle üblichen Decklackbeschichtungen aufgebracht werden. Bevorzugt werden die auf dem Gebiet der Lackchemie verwendeten Klarlacke, wie z.B. Klarlacke auf Wasseroder Lösemittelbasis, Pulverklarlacke, Pulverslurry-Klarlacke, wie insbesondere solche, die in WO 96/32452 beschrieben sind, lösemittelhaltige und wäßrige Zweikomponenten-Klarlacke oder andere eingesetzt werden.

Die transparente Decklackbeschichtung kann nach üblichen im Stand der Technik bekannten Verfahren aufgebracht werden.

Gegenstand der vorliegenden Erfindung ist demgemäß auch ein Verfahren zur Herstellung eines mehrschichtig beschichteten Substrats, wobei der Überzug auf die Substratoberfläche aufgebracht wird, indem
(A) auf eine mit einem üblichen Füller oder gegebenenfalls mit einer ersten Basislackschicht beschichtete Substratoberfläche gegebenenfalls nach Abdunsten die erfindungsgemäße Basislackzusammensetzung aufgebracht wird, welche man ebenfalls gegebenenfalls abdunsten läßt,
(B) auf die so erhaltene Basisschicht eine geeignete transparente Decklackzusammensetzung aufgebracht wird und
(C) die Basisschicht sowie gegebenenfalls die Füllerschicht bzw. die erste Basislackschicht zusammen mit der Deckschicht eingebrannt wird.

Dabei liegen die Einbrenntemperaturen im allgemeinen zwischen 110 und 180° C, vorzugsweise zwischen 130 und 155°C, und die Einbrennzeiten zwischen 10 und 45 Minuten, vorzugsweise bei etwa 30 Minuten.

Bei der Ausbesserung von mehrschichtigen Lackierungen ist es möglich, die Basisbeschichtungszusammensetzung ohne spezielle Hilfsmittel auf die auszubessernde Substratoberfläche aufzutragen.

Die folgenden Beispiele sollen die Erfindung veranschaulichen.

### Beispiele

### Beispiel 1: Herstellung des erfindungsgemäßen Basislacks B1

### Beispiel 1.1: Herstellung einer Mahlgut-Paste

Zu 410,2 g eines gemäß Beispiel 1 der DE-A 40 10 176 hergestellten Anreibebindemittels werden nacheinander unter starkem Rühren 175 g eines methanolveretherten Melaminharzes (HMMM der Fa. Dyno Cyanamid), 249,0 g deionisiertes Wasser, 1,8 g Ammoniak (25%ige wäßrige Lösung), 2,5 g eines Polyacrylsäure-Rheologiehilfsmittels (Viscalex HV30: Hersteller Allied Colloids), 25 g Butoxypropanol, 122,7 g Butylglykol, 51 g einer 50%igen Lösung aus Tetramethyldecindiol in Butylglykol, 144,3 g Phthalocyaningrün (Heliogengrün L8730 der Fa. BASF AG), 36 g Pthalocyaninblau (Palomar blue der Fa. Mobay), 5,6 g Farbruss (FW2 der Fa. Degussa AG), 17,25 g Aerosil R805 (Fa. Degussa AG), 1,4 g Ammoniak (25%ige wäßrige Lösung) und 58 g deionisiertes Wasser gegeben, 20 Minuten bei einer maximalen Produkttemperatur von 40°C dissolviert und anschließend auf einer Rührwerksmühle bis zu einer Feinheit von 5 bis 10 µm (Hegemannkeil 15) vermahlen.

### Beispiel 1.2: Herstellung des erfindungsgemäßen Basislacks B1

A. In einem Mischgefäß werden 15,6 Gewichtsteile Wasser und 0,5 Gewichtsteile Butylglykol vorgelegt. Unter Rühren werden 8 Gewichtsteile wäßrige Acrylatdispersion Acronal® 290D (BASF AG) (Komponente (i)), 20,8 Gewichtsteile wäßrige Polyurethanharzdispersion gemäß Beispiel 1 in DE-A 43 39 870 (Komponente (ii)), sowie zur Neutralisation 0,07 Gewichtsteile 25%ige wäßrige Ammoniak-Lösung zugegeben.
   Zu dem erhaltenen Gemisch wird langsam ein Gemisch aus 15 Gewichtsteilen Wasser, 1,66 Gewichtsteilen Viscalex HV30 der Fa.
   Allied Colloids, sowie zur weiteren Neutralisation 0,08 Gewichtsteile einer 25%igen wäßrigen Ammoniak-Lösung gegeben.
   Anschließend werden 26,0 Gewichtsteile der gemäß Beispiel 1 hergestellten Mahlgutpaste unter starkem Rühren hinzugefügt.
B. In einem separaten Mischer werden 2,8 Gewichtsteile eines grünen Perlglanzpigments (Mearlin Extra Fine Green 839V der Fa. Mearl) und 3.9 Gewichtsteile Butylglykol gemischt. Anschließend wird diese Mischung der gemäß Schritt A. hergestellten Mischung unter starken Rühren portionsweise hinzugefügt.
C. In einem separaten Mischer wird eine Mischung aus 0,9 Gewichtsteilen einer handelsüblichen Aluminiumbronze (Alu-Stapa Hydrolux VP51284/G der Fa. Eckart: Aluminiumgehalt 65%) und 1,3 Gewichtsteilen Butylglykol glatt gerührt. Anschließend wird diese Mischung der gemäß Schritt B. hergestellten Mischung unter starkem Rühren portionsweise hinzugefügt.
   Die Viskosität des erhaltenen Lackes wird mit deionisiertem Wasser auf ca. 90 mPas bei 1000/s eingestellt.

### Vergleichsbeispiel 2: Herstellung von Basislacken V1 und V2

Als Vergleichsbeispiele werden die Basislacke V1, bei dem nur Acronal ® 290D (Komponente (i)) eingesetzt wird, und V2, bei dem nur die Polyurethanharzdispersion gemäß Beispiel 1 der DE-A 43 89 870 (Komponente (ii)) eingesetzt wird, formuliert.
Bezüglich der weiteren Komponenten sind die Basislacke B1, V1 und V2 identisch wie in folgender Tabelle (in der Reihenfolge ihrer Zugabe gemäß Beispiel 1) angeführt:

**Tabelle 1:**

| Zusammensetzungen der Basislacke B1, V1 und V2 | | | |
|---|---|---|---|
| **Komponente / Gewichtsteile** | **B1** | **V1** | **V2** |
| Komponente (i) | 8,0 | 22,5 | - |
| Komponente (ii) | 20,8 | - | 31,8 |
| deionisiertes Wasser | 15,6 | 15,6 | 15,6 |
| Butylglykol | 0,5 | 0,5 | 0,5 |
| wäßriger Ammoniak (25%) | 0,07 | 0,07 | 0,07 |
| wäßriges Acrylatcopolymerisat-Rheologiehilfsmittel (30%) | 1,66 | 1,66 | 1,66 |
| deionisiertes Wasser | 15,0 | 15,0 | 15,0 |
| wäßriger Ammoniak (25%) | 0,08 | 0,08 | 0,08 |
| Mahlgutpaste | 26,0 | 26,0 | 26.0 |
| Mearlin Extra Fine Green 839V | 2,8 | 2,8 | 2,8 |
| Butylglykol | 3,9 | 3,9 | 3,9 |
| Alu-Stapa Hydrolux VP51284/G | 0,9 | 0,9 | 0,9 |
| Butylglykol | 1,3 | 1,3 | 1,3 |

### Beispiel 3: Herstellung des Dünnschichtfüllers gemäß DE-A 44 38 504

Zu 30,9 g eines gemäß Beispiel 1 der DE-A 44 38 504 hergestellten Bindemittels (31% Feststoffgehalt) werden nacheinander unter starkem Rühren 0,5 g Additol XW395 (Fa.Hoechst AG), 1,8 g einer 50%igen Lösung von Tetramethyldecinol in Butylglykol, 0,2 g Aerosil R805 (Fa.Degussa AG), 0,02 g Farbruß (FW2 der Fa. Degussa AG), 0,3 g Titanrutil R900 (Fa.DuPont), 3,45 g Heliogengrün L8730 (Fa.BASF AG), 0,35 g Bayferox (Fa.Bayer AG), 2,95 g Hostaperm-Gelb H3G (Fa.Hoechst AG), 4,0 g Talkum 10 MO (Fa.Luzenac), 3,1 g Blanc Fixe Plv. F (Fa.Sachtleben) und 7,5 g deionisiertes Wasser gegeben, 20 Minuten bei einer maximalen Temperatur von 40°C dissolvert und anschließend auf einer Rührwerksmühle bis zu einer Feinheit von 10 bis 15 µm (Hegemannkeil 25) vermahlen.

Zu 54,77 g des solchermaßen hergestellten Mahlguts werden unter starkem Rühren 30,9 g des gemäß Beispiel 1 der DE-A 44 38 504 hergestellten Bindemittels (31% Feststoffgehalt), 2,8 Butylglykol, 0,45 g Byk-346 (Fa.Byk-Gulden), 0,9 g Byketol WS (Fa.Byk-Gulden), 1,5 g Shellsol T (Fa.Shell), 4 g deionisiertes Wasser und 4,5 g einer 10%igen wäßrigen Dimethylethanol-Lösung zugegeben.
Zur Applikation wird der Dünnschichtfüller mit deionisiertem Wasser auf eine Viskosität von 30 Sekunden im DIN4-Becher eingestellt.

### Beispiel 4: Herstellung von Zweischichtlackierungen mit den Basislacken B1, V1 und V2

Zunächst wird der Dünnschichtfüller gemäß Beispiel 3 auf ein mit einem handelsüblichen Elektrotauchlack lackiertes Karosserieblech aufgebracht, 5 Minuten bei 20°C abgelüftet und in einem Umluftofen 5 Minuten bei 80°C gehalten, so daß der getrocknete Dünnschichtfüller eine Trockenfilmdicke von etwa 15 µm aufweist.
Nach dem Abkühlen auf 20°C wird das solchermaßen beschichtete Karosserieblech mit den gemäß Beispiel 2 hergestellten Basislacken B1, V1 und V2 beschichtet und 5 Minuten bei 20°C abgelüftet und in einem Umluftofen 5 Minuten bei 80°C gehalten, so daß getrocknete Basislackfilm eine Trockenfilmdicke von etwa 15 µm aufweist.
Auf diesen Aufbau wird ein Pulverslurry-Klarlack gemäß dem Beispiel der WO 96/32452 lackiert, 5 Minuten bei 20°C abgelüftet, in einem Umluftofen 5 Minuten bei einer Objekttemperatur von 50°C vorgetrocknet und abschließend bei 30 Minuten bei 150°C eingebrannt. Die Trockenfilmschichtdicke der Klarlackschicht beträgt ca. 40 µm.

### Beipiel 4: Prüfung der Haftung der Klarlackschicht

Es werden Prüfungen der unbelasteten Klarlackschicht sowie nach Schwitzwasser-Belastung durchgeführt.
a) Prüfung der unbelasteten Klarlackschicht:
   Mit einem Messer werden zwei paralelle Schnitte (ca. 3 cm Länge und 1 cm Abstand) auf dem beschichteten Blech derart angebracht, daß die Schnittiefe bis zum Blech reicht.
   Ein Gewebeklebeband der Fa. Beiersdorf wird im rechten Winkel über die Schnittbahnen verklebt. Hierbei wird das Klebeband mit einem Holzspatel fest angepreßt.
   Hiernach wird das Klebeband ruckartig senkrecht zum Substrat abgerissen. Dieses Verfahren wird 8 mal an derselben Prüfstelle mit jeweils frischen Klebeband durchgeführt.
   Die Beurteilung erfolgt visuell: zeigt die Beschichtung keine Beschädigung, dann wird sie mit "in Ordnung" ("i.O.") beurteilt. Eine Lackdelamination wird mit "nicht in Ordnung" ("n.i.O.") beurteilt.
b) Haftungs
   prüfung der mit Schwitzwasser belasteten Klarlackschicht:
   Die Haftungsprüfüng erfolgt nach Schwitzwasserbelastung, welche nach
   DIN 5001KK durchgeführt wird, mittels Gitterschnitt-Test nach EN ISO 2409 nach 0 bzw. 2 Stunden Regeneration.

**Tabelle 2:**

| Ergebnisse der Haftungsprüfungen | | | |
|---|---|---|---|
| **Basislack** | **B1** | **V1** | **V2** |
| Klarlackhaftung unbelastet | i.O. | n.i.O | i.O. |
| Haftung Schwitzwasser: 0 h Regeneration | 0 | 5 | 5 |
| 2 h Regeneration | 0 | 2 | 5 |

## Patentansprüche

1. Basislackzusammensetzung enthaltend als Bindemittelbestandteile
(i) eine an sich bekannte Acrylatdispersion mit einem Gehalt von 30 bis 60 Gew.-% C₁-C₈-Alkyl(meth)acrylat-haltigen Monomeren, 30 bis 60 Gew.-% vinylaromatischen Monomeren und 0,5 bis 10 Gew. -% (Meth)acrylsäure im Polymerisat, sowie
(ii) eine Dispersion eines Polymeren, das in an sich bekannter Weise erhältlich ist, indem in einer wäßrigen Dispersion eines Polyurethanharzes, das ein zahlenmittleres Molekulargewicht Mn von 1000 bis 30.000 Dalton aufweist und im statistischen Mittel pro Molekül 0,05 bis 1,1 polymerisierbare Doppelbindungen enthält, ein ethylenisch ungesättigtes Monomer oder ein Gemisch aus ethylenisch ungesättigten Monomeren in Gegenwart eines wasserunlöslichen Initiators oder eines Gemischs aus wasserunlöslichen Initiatioren radikalisch polymerisiert wird, wobei das Gewichtsverhältnis zwischen dem Polyurethanharz und dem ethylenisch ungesät- tigten Monomeren bzw. dem Gemisch aus ethylenisch ungesättigten Monomeren zwischen 1:10 und 10:1 liegt, und
(iii) ein Rheologiehilfsmittel, das ein synthetisches Polymer mit ionischen und/oder assoziativ wirkenden Gruppen enthält,
wobei der Anteil der Komponente (i) zwischen 10 und 80 Gew.-% und der Anteil der Komponente (ii) zwischen 20 und 90 Gew.-%, jeweils bezogen auf die Summe der Gewichtanteile der Komponenten (i) und (ii), beträgt.

2. Basislackzusammensetzung nach Anspruch 1, **dadurch gekennzeichnet, daß** der Anteil der Komponente (i) zwischen 20 und 60 Gew.-% und der Anteil der Komponente (ii) zwischen 40 und 80 Gew.-%, jeweils bezogen auf die Summe der Gewichtanteile der Komponenten (i) und (ii), beträgt.

3. Basislackzusammensetzung nach einem der Ansprüche 1 oder 2, **dadurch gekennzeichnet, daß** die Komponente (iii) zusätzlich ein ionisches Schichtsilikat enthält.

4. Basislackzusammensetzung nach einem der Ansprüche 1 bis 3, **dadurch gekennzeichnet, daß** die Basislackzusammensetzung von 3 bis 65 Gew.-%, bezogen auf den Festkörpergehalt, Pigmente und Füllstoffe enthält.

5. Verfahren zur Herstellung eines mehrschichtigen Überzugs auf einer Substratoberfläche, bei dem
(A) auf eine mit einem üblichen Füller oder gegebenenfalls mit einem bekannten wäßrigen Wasserbasislack beschichtete Substratoberfläche, gegebenenfalls nach Abdunsten, die Basislackzusammensetzung nach einem der Ansprüche 1 bis 4 aufgebracht wird, welche man ebenfalls gegebenenfalls abdunsten läßt,
(B) auf die so erhaltene Basisschicht eine geeignete transparente Decklackzusammensetzung aufgebracht wird und
(C) die Basisschicht sowie gegebenenfalls die Füllerschicht bzw. die erste Basislackschicht zusammen mit der Deckschicht eingebrannt wird.

6. Verfahren nach Anspruch 5, **dadurch gekennzeichnet, daß** als transparente Decklackzusammensetzung in der Stufe (B) ein 2-Komponenten-Klarlack oder ein Pulverslurry- Klarlack eingesetzt wird.

## Claims

1. Basecoat composition comprising as binder constituents
(i) a conventional acrylate dispersion having a content of from 30 to 60% by weight of C₁-C₈-alkyl (meth)acrylate-containing monomers, from 30 to 60% by weight of vinylaromatic monomers and from 0.5 to 10% by weight of (meth)acrylic acid in the polymer, and
(ii) a dispersion of a polymer which is obtainable conventionally by subjecting an ethylenically unsaturated monomer or a mixture of ethylenically unsaturated monomers to free-radical polymerization in the presence of a water-insoluble initiator or of a mixture of water-insoluble initiators and in an aqueous dispersion of a polyurethane resin which has a number-average molecular weight Mn of from 1000 to 30,000 daltons and comprises on average from 0.05 to 1.1 polymerizable double bonds per molecule, the weight ratio between the polyurethane resin and the ethylenically unsaturated monomer or the mixture of ethylenically unsaturated monomers lying between 1:10 and 10:1, and
(iii)a rheological assistant which preferably comprises a synthetic polymer having ionic and/or associative groups,
the proportion of component (i) lying between 10 and 80% by weight, and the proportion of component (ii) lying between 20 and 90% by weight, based in each case on the sum of the proportions by weight of components (i) and (ii).

2. Basecoat composition according to Claim 1,
**characterized in that** the proportion of component (i) is between 20 and 60% by weight and the proportion of component (ii) is between 40 and 80% by weight, based in each case on the sum of the proportions by weight of components (i) and (ii).

3. Basecoat composition according to either of Claims 1 and 2, **characterized in that** component (iii) additionally comprises an anionic phyllosilicate.

4. Basecoat composition according to one of Claims 1 to 3, **characterized in that** the basecoat composition comprises from 3 to 65% by weight, based on the solids content, of pigments and extenders.

5. Process for producing a multicoat coating system on a substrate surface, by
(A) applying to a substrate surface coated with a customary surfacer or, if desired, with a known aqueous water-based coating material, optionally after flashoff, the basecoat composition according to one of Claims 1 to 4, which is likewise optionally flashed off,
(B) applying a suitable transparent topcoat composition to the resulting basecoat film, and
(C) baking the basecoat film and, if present, the surfacer coat or the first basecoat film together with the topcoat film.

6. Process according to Claim 5, **characterized in that** a two-component clearcoat or a powder slurry clearcoat is employed as transparent topcoat composition in stage (B).

## Revendications

1. Composition de peinture de base contenant en tant que composants de liant
(i) une dispersion d'acrylate connue en soi, ayant une teneur de 30 à 60 % en poids en monomères contenant un groupe (méth)acrylate d'alkyle en C₁-C₈, de 30 à 60 % en poids en monomères vinylaromatiques et de 0,5 à 10 % en poids en acide (méth)acrylique, dans le copolymère d'acrylate, ainsi que
(ii) une dispersion d'un polymère qui peut être obtenu d'une façon connue en soi, par polymérisation radicalaire, dans une dispersion aqueuse d'une résine polyuréthanne qui présente une masse moléculaire moyenne en nombre Mn de 1 000 à 30 000 daltons et comporte en moyenne statistique par molécule de 0,05 à 1,1 double liaison polymérisable, d'un monomère à insaturation éthylénique ou d'un mélange de monomères à insaturation éthylénique, en présence d'un amorceur insoluble dans l'eau, ou d'un mélange d'amorceurs solubles dans l'eau, le rapport pondéral entre la résine polyuréthanne et le monomère à insaturation éthylénique ou le mélange de monomères à insaturation éthylénique étant compris entre 1:10 et 10:1, et
(iii) un agent auxiliaire de rhéologie qui contient de préférence un polymère synthétique comportant des groupes ioniques et/ou des groupes à action associative,
la proportion du composant (i) étant comprise entre 10 et 80 % en poids, et la proportion du composant (ii) étant comprise entre 20 et 90 % en poids, dans chaque cas par rapport à la somme des proportions en poids des composants (i) et (ii).

2. Composition de peinture de base selon la revendication 1, **caractérisée en ce que** la proportion du composant (i) est comprise entre 20 et 60 % en poids et la proportion du composant (ii) est comprise entre 40 et 80 % en poids, dans chaque cas par rapport à la somme des proportions en poids des composants (i) et (ii).

3. Composition de peinture de base selon la revendication 1 ou 2, **caractérisée en ce que** le composant (iii) contient en outre un silicate lamellaire ionique.

4. Composition de peinture de base selon l'une quelconque des revendications 1 à 3, **caractérisée en ce que** la composition de peinture de base contient de 3 à 65 % en poids, par rapport à la teneur en matière solide, de pigment et de charges.

5. Procédé pour la production d'un revêtement multicouche sur la surface d'un subjectile, dans lequel
(A) sur la surface d'un subjectile revêtue avec un apprêt de garnissage usuel ou éventuellement avec une peinture de base à l'eau connue, éventuellement après évaporation, est appliquée la composition de peinture de base selon l'une quelconque des revendications 1 à 4, qu'éventuellement on laisse également évaporer,
(B) une composition appropriée de vernis transparent de finition est appliquée sur la couche de base ainsi obtenue, et
(C) la couche de base ainsi qu'éventuellement la couche d'apprêt de garnissage ou la première couche de base, conjointement avec la couche de finition, sont séchées au four.

6. Procédé selon la revendication 5, **caractérisé en ce qu'**on utilise comme composition de vernis transparent de finition dans l'étape (B) un vernis à deux composants ou un vernis en suspension de poudre.
